# EUROPÄISCHE PATENTSCHRIFT

(11) **EP 3 402 700 B1**
(45) Veröffentlichungstag und Bekanntmachung des Hinweises auf die Patenterteilung: **22.01.2020**
(21) Anmeldenummer: 17749711.2
(22) Anmeldetag: 09.08.2017
(51) Int. Cl.: B62D 1/11, B60R 21/203, B60Q 5/00

(54) **KOPPLUNGSVORRICHTUNG ZUR SCHWINGFÄHIGEN BEFESTIGUNG EINES GASSACKMODULS AN EINEM FAHRZEUGLENKRAD**
COUPLING DEVICE FOR THE ATTACHMENT OF AN AIRBAG MODULE TO A VEHICLE STEERING WHEEL IN AN OSCILLATORY MANNER
DISPOSITIF D'ACCOUPLEMENT PERMETTANT DE FIXER DE MANIÈRE OSCILLANTE UN MODULE DE SAC GONFLABLE À UN VOLANT DE DIRECTION DE VÉHICULE

(30) Priorität: 15.12.2016 DE 102016124530
(43) Veröffentlichungstag der Anmeldung: 21.11.2018
(73) Patentinhaber: TRW Automotive Safety Systems GmbH, 63743 Aschaffenburg (DE)
(72) Erfinder: SCHÜTZ, Dominik, 63872 Heimbuchenthal (DE)
(74) Vertreter: ZF TRW Patentabteilung
(86) Internationale Anmeldenummer: PCT/EP2017/070144
(87) Internationale Veröffentlichungsnummer: WO 2018/108335

(56) Entgegenhaltungen:
- EP-A2- 1 375 293
- DE-A1-102009 050 893
- DE-U1-202005 018 665

## Beschreibung

Die Erfindung betrifft eine Kopplungsvorrichtung zur schwingfähigen Befestigung eines Gassackmoduls an einem Lenkradgrundkörper eines Fahrzeuglenkrads sowie eine Baugruppe und ein Fahrzeuglenkrad mit einer solchen Kopplungsvorrichtung.

Bei vielen Fahrzeuglenkrädern treten im Leerlauf oder in bestimmten Geschwindigkeitsbereichen des Fahrzeugs Vibrationen auf, die vom Fahrer als störend empfunden werden. Diese Vibrationen sind unter anderem auf die starre Kopplung des Lenkrads mit der Lenksäule zurückzuführen.

Es ist bekannt, zur Vermeidung der unerwünschten Lenkradschwingungen sogenannte Schwingungstilger einzusetzen, um die Eigenfrequenz des Gesamtsystems so abzustimmen, dass sie in einem unkritischen Bereich liegt. Derzeit wird als gegenschwingende Tilgermasse beispielsweise der Gasgenerator eines im Lenkrad angeordneten Gassackmoduls eingesetzt.

Da sich die Schwingungstilgung mit zunehmender Tilgermasse verbessert, ist in der DE 37 10 173 C2 bereits eine Kraftfahrzeuglenkung beschrieben, bei der in vorteilhafter Weise das gesamte Gassackmodul als Tilgermasse genutzt wird. Über die Schersteifigkeit der eingesetzten Schwingungsdämpfer lässt sich die erste Eigenfrequenz des Systems Lenkrad/Modul so niedrig abstimmen, dass sie in einem Geschwindigkeitsbereich des Fahrzeugs zu liegen kommt, in dem noch keine hohen Anregungsamplituden auftreten (beispielsweise bei etwa 120 km/h).

Bei schwingfähigen Gassackmodulen werden die Schwingungstilger derzeit auch genutzt, um eine Hupenfunktion am Fahrzeuglenkrad zu realisieren, wobei ein Hupenkontakt am Gassackmodul und ein entsprechender Gegenkontakt am Lenkradgrundkörper vorgesehen sind. Ein solches Fahrzeuglenkrad ist beispielsweise in der US 8,720,942 B2 offenbart.

Es hat sich allerdings herausgestellt, dass es bei solchen Lenkrädern insbesondere auf Schlechtwegstrecken zu Fehlauslösungen der Fahrzeughupe kommt oder im Vergleich zu Lenkrädern ohne Schwingungstilgung größere Kontaktierwege bzw. höhere Kontaktierkräfte zum Auslösen der Fahrzeughupe notwendig sind. Dies führt zu unerwünscht großen Spaltmaßen am Fahrzeuglenkrad und Komfortbeeinträchtigungen beim Betätigen der Fahrzeughupe.

In der DE 10 2009 050 893 A1 ist ein Fahrzeuglenkrad mit einem Gassackmodul und einem Lenkradkörper beschrieben, wobei das Gassackmodul mit einer am Lenkradkörper befestigten Montageplatte verrastet ist. Vorgeschlagen wird dabei eine Rastverbindung, die im Fahrbetrieb unerwünschte Klappergeräusche verhindern soll.

Die gattungsgemäße EP 1 834 843 A2 offenbart ein Fahrzeuglenkrad mit einer Kupplungsvorrichtung gemäß dem Oberbegriff des Patentanspruchs 1, mit einem Lenkradskelett, einem Gassackmodul und einer zwischen Lenkradskelett und Gassackmodul angeordneten Positionierungsplatte, wobei die Positionierungsplatte zur Realisierung einer Hupenfunktion zunächst federnd am Lenkradskelett befestigt und nachfolgend das Gassackmodul durch eine Rastverbindung fest an der Positionierungsplatte fixiert wird.

Aufgabe der Erfindung ist es, ein konstruktiv einfach aufgebautes Fahrzeuglenkrad mit Schwingungstilger zu schaffen, bei dem eine Hupenfunktion integriert ist, die bei hoher Funktionssicherheit einen möglichst geringen Betätigungsweg sowie eine möglichst geringe Betätigungskraft aufweist.

Erfindungsgemäß wird diese Aufgabe gelöst durch eine Kopplungsvorrichtung zur schwingfähigen Befestigung eines vorgefertigten Gassackmoduls an einem Lenkradgrundkörper eines Fahrzeuglenkrads, mit einem Befestigungskörper, der bezüglich einer Lenkradachse eine axiale Unterseite aufweist, welche im zusammengesetzten Zustand des Fahrzeuglenkrads dem Lenkradgrundkörper zugewandt ist, sowie eine entgegengesetzte axiale Oberseite, welche im zusammengesetzten Zustand des Fahrzeuglenkrads einem Gassackmodul zugewandt ist, einer auf der axialen Unterseite vorgesehenen Anlagefläche für ein Dämpfungselement zur schwingfähigen Kopplung des Befestigungskörpers mit dem Lenkradgrundkörper, sowie einem auf der Oberseite des Befestigungskörpers angeordneten Rastelement zur Verrastung mit dem Gassackmodul, wobei das Rastelement so ausgebildet ist, dass das Gassackmodul durch eine Rastverbindung im Wesentlichen axial unverschieblich oder axial begrenzt verschieblich mit dem Befestigungskörper koppelbar ist, und wobei die Kopplungsvorrichtung ein Dämpfungselement aufweist, welches an der Anlagefläche auf der axialen Unterseite des Befestigungskörpers anliegt und den Befestigungskörper mit dem Lenkradgrundkörper schwingfähig koppelt. Mit Bezug auf den Befestigungskörper der Kopplungsvorrichtung erfolgt also lenkradgrundkörperseitig eine Schwingungstilgung (insbesondere quer zur Lenkradachse), wohingegen eine Hupenfunktion (in Richtung der Lenkradachse) modulseitig realisiert ist. Dadurch sind die Hupenfunktion und die Schwingungstilgungsfunktion auf einfache Art und Weise voneinander getrennt, sodass Schwingungsanregungen der Lenksäule und des damit fest verbundenen Lenkradgrundkörpers (zum Beispiel auf Schlechtwegstrecken) zunächst zwischen dem Lenkradgrundkörper und dem Befestigungskörper gedämpft werden und sich nicht mehr unmittelbar auf die modulseitige Hupenfunktion auswirken. Eine schwingfähige Kopplung des Befestigungskörpers mit dem Lenkradgrundkörper durch das Dämpfungselement ist im Rahmen dieser Anmeldung so zu verstehen, dass das Dämpfungselement zumindest quer zur Lenkradachse, bevorzugt auch in Richtung der Lenkradachse, eine gedämpfte Schwingung zwischen dem Befestigungskörper und dem Lenkradgrundkörper ermöglicht. Die maximale Amplitude einer möglichen Schwingung in Richtung der Lenkradachse ist dabei vorzugsweise kleiner als ein axialer Betätigungsweg zum Auslösen einer Fahrzeughupe.

Der Befestigungskörper der Kopplungsvorrichtung ist bevorzugt eine Befestigungsplatte, die sich im Wesentlichen senkrecht zur Lenkradachse erstreckt und insbesondere mehrere Rastelemente aufweist, wobei die Rastelemente vorzugsweise einstückig mit der Befestigungsplatte ausgeführt sind. Ferner können die Rastelemente einen identischen Abstand zur Lenkradachse aufweisen und in Umfangsrichtung gleichmäßig verteilt angeordnet sein. Dadurch ergibt sich eine einfache und schnelle Montage der Kopplungsvorrichtung sowie eine stabile Lagerung des Gassackmoduls. Alternativ ist selbstverständlich auch denkbar, dass zur schwingfähigen Befestigung des Gassackmoduls am Lenkradgrundkörper mehrere separate Befestigungskörper mit jeweils einem Rastelement vorgesehen sind.

Jedem Rastelement kann ein Dämpfungselement zugeordnet sein, wobei die Rastelemente und zugeordneten Dämpfungselemente jeweils axial hintereinanderliegend angeordnet sind.

Gemäß einer Ausführungsform der Kopplungsvorrichtung ist auf der axialen Oberseite des Befestigungskörpers ein Hupenkontakt oder ein Betätigungselement zur Auslösung eines Hupsignals bei einer Berührung zwischen Hupenkontakt und einem am Gassackmodul angeordneten Gegenkontakt, wobei das Rastelement so ausgebildet ist, dass das Gassackmodul durch die Rastverbindung axial begrenzt verschieblich mit dem Befestigungskörper koppelbar ist. Mit anderen Worten wird in diesem Fall das gesamte Gassackmodul zur Betätigung der Fahrzeughupe axial verschoben, wobei sowohl der Hupenkontakt als auch der Gegenkontakt an schwingfähig gelagerten Komponenten des Fahrzeuglenkrads ausgebildet sind.

Gemäß einer weiteren Ausführungsform weist die Kopplungsvorrichtung ein Dämpfungselement auf, welches im Bereich der Anlagefläche an der axialen Unterseite des Befestigungskörpers anliegt und den Befestigungskörper mit dem Lenkradgrundkörper schwingfähig koppelt, sodass der Befestigungskörper und der Lenkradgrundkörper zumindest quer zur Lenkradachse relativ zueinander beweglich sind, insbesondere wobei das Dämpfungselement an der axialen Unterseite des Befestigungskörpers vormontiert ist. Das Dämpfungselement umfasst dabei ein schwingungsdämpfendes Material sowie optional Anschlagelemente und/oder Montagehülsen, die an das schwingungsdämpfende Material angrenzen.

In dieser Ausführungsform erstreckt sich das Dämpfungselement bevorzugt durch eine Öffnung des Befestigungskörpers.

Ferner kann das Dämpfungselement ein ringförmig ausgeführtes, schwingungsdämpfendes Material mit einem radialen Absatz umfassen, wobei ein Rand der Befestigungskörper-Öffnung eine Anlagefläche bildet und am radialen Absatz des schwingungsdämpfenden Materials angreift.

Insbesondere ist der radiale Absatz im schwingungsdämpfenden Material als Nut ausgeführt, wobei der Rand der Befestigungskörper-Öffnung zumindest abschnittsweise in die Nut eingreift. Dies ermöglicht eine schnelle und einfache axiale Positionierung und Fixierung des Dämpfungselements am Befestigungskörper.

Die eingangs genannte Aufgabe wird im Übrigen gelöst durch eine Baugruppe mit einem Lenkradgrundkörper, einer oben beschriebenen Kopplungsvorrichtung und einer Schraube zur Montage der Kopplungsvorrichtung am Lenkradgrundkörper, welche sich durch das ringförmig ausgeführte, schwingungsdämpfende Material erstreckt, wobei das schwingungsdämpfende Material mit einer axialen Stirnseite zumindest abschnittsweise an einem Schraubenkopf der Schraube und/oder mit einer entgegengesetzten axialen Stirnseite zumindest abschnittsweise am Lenkradgrundkörper anliegt. Die Begrenzung des Aufnahmeraums für das schwingungsdämpfende Material durch sowieso vorhandene Bauteile wie den Befestigungskörper, den Schraubenkopf und/oder den Lenkradgrundkörper ist besonders vorteilhaft, weil dann auf separate Montagehülsen und/oder Anschlagelemente verzichtet werden kann. Idealerweise wird das Dämpfungselement dann ausschließlich durch das schwingungsdämpfende Material gebildet.

Ferner umfasst die Erfindung eine Baugruppe mit einem Lenkradgrundkörper, einer oben beschriebenen Kopplungsvorrichtung und einem Dämpfungselement zur schwingfähigen Kopplung des Befestigungskörpers mit dem Lenkradgrundkörper, wobei das Dämpfungselement auf der axialen Unterseite des Befestigungskörpers angeordnet sowie zusammen mit dem Befestigungskörper am Lenkradgrundkörper vormontiert ist.

Die Erfindung umfasst auch eine Baugruppe mit einem vorgefertigten Gassackmodul und einer oben beschriebenen Kopplungsvorrichtung, wobei das Gassackmodul, insbesondere ein Modulboden des Gassackmoduls, axial angrenzend an den Hupenkontakt einen Gegenkontakt aufweist, und wobei das Gassackmodul zur Auslösung eines Hupsignals relativ zum Befestigungskörper axial verschieblich gelagert ist.

Ferner betrifft die Erfindung eine Baugruppe umfassend ein vorgefertigtes Gassackmodul sowie eine oben beschriebene Kopplungsvorrichtung, wobei das Gassackmodul einen (manuell betätigbaren) Moduldeckel mit einem Hupenkontakt sowie ein weiteres Modulbauteil mit einem axial an den Hupenkontakt angrenzenden Gegenkontakt aufweist, wobei der Moduldeckel zur Auslösung eines Hupsignals relativ zum weiteren Modulbauteil axial verschieblich gelagert ist. Mit anderen Worten ist die Hupenfunktion hier "innerhalb" des Gassackmoduls realisiert, wobei auch in dieser Ausführungsvariante der Hupenkontakt und der Gegenkontakt an schwingfähig gelagerten Komponenten des Fahrzeuglenkrads ausgebildet sind.

Schließlich wird die eingangs genannte Aufgabe auch gelöst durch ein Fahrzeuglenkrad eines Kraftfahrzeugs, mit einem Lenkradgrundkörper, einem vorgefertigten Gassackmodul, einer oben beschriebenen Kopplungsvorrichtung und einem Dämpfungselement zur schwingfähigen Kopplung des Befestigungskörpers mit dem Lenkradgrundkörper, wobei das Fahrzeuglenkrad einen Hupenkontakt sowie einen axial an den Hupenkontakt angrenzenden Gegenkontakt aufweist, und wobei sowohl der Hupenkontakt als auch der Gegenkontakt an schwingfähig gelagerten Komponenten des Fahrzeuglenkrads ausgebildet sind. Insbesondere bilden die Kopplungsvorrichtung und das Dämpfungselement hierbei eine Tilgereinheit, welche am Lenkradgrundkörper vormontiert ist. Dadurch lässt sich das Fahrzeuglenkrad mit besonders geringem Aufwand zusammenbauen. Die vorgefertigte Tilgereinheit wird zunächst mit dem Lenkradgrundkörper verbunden, insbesondere verschraubt, woraufhin das ebenfalls vorgefertigte Gassackmodul axial zugeführt wird, bis es mit der Tilgereinheit verrastet und dadurch am Lenkradgrundkörper befestigt ist.

In einer konstruktiv besonders einfachen Ausführungsform des Fahrzeuglenkrads ist das Gassackmodul ausschließlich durch die Rastverbindung mit der Kopplungsvorrichtung am Lenkradgrundkörper befestigt.

Alternativ ist jedoch auch denkbar, dass eine zusätzliche (Rast-)Verbindung zwischen dem Gassackmodul und dem Lenkradgrundkörper vorgesehen ist, die zwar im normalen Fahrbetrieb des Fahrzeugs eine begrenzte Relativbewegung zulässt, bei einer Aktivierung des Gassackmoduls jedoch sicherstellt, dass sich das Gassackmodul nicht vollständig vom Lenkradgrundkörper löst. Folglich ist das Gassackmodul in dieser Ausführungsform mittels der Kopplungsvorrichtung am Lenkradgrundkörper befestigt, wobei darüber hinaus eine weitere, von der Kopplungsvorrichtung unabhängige Verbindung zwischen dem Gassackmodul und dem Lenkradgrundkörper vorgesehen ist. Dies ist vorteilhaft, weil die Verbindungen zur Kopplungsvorrichtung in diesem Fall nicht für die extremen Belastungen ausgelegt werden müssen, wie sie beispielsweise bei einer Aktivierung des Gassackmoduls auftreten.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine perspektivische Explosionsansicht eines erfindungsgemäßen Fahrzeuglenkrads mit einer erfindungsgemäßen Kopplungsvorrichtung gemäß einer Ausführungsform;
- Figur 2 einen schematischen Detailschnitt durch das Lenkrad gemäß Figur 1 im Bereich eines Rastelements der Kopplungsvorrichtung;
- Figur 3 eine perspektivische Explosionsansicht eines erfindungsgemäßen Fahrzeuglenkrads mit einer erfindungsgemäßen Kopplungsvorrichtung gemäß einer weiteren Ausführungsform;
- Figur 4 einen schematischen Detailschnitt durch das Lenkrad gemäß Figur 3 im Bereich eines Rastelements der Kopplungsvorrichtung;
- Figur 5 eine perspektivische Ansicht einer erfindungsgemäßen Baugruppe für ein Fahrzeuglenkrad mit einer erfindungsgemäßen Kopplungsvorrichtung gemäß einer Ausführungsform;
- Figur 6 eine perspektivische Ansicht einer erfindungsgemäßen Baugruppe für ein Fahrzeuglenkrad mit einer erfindungsgemäßen Kopplungsvorrichtung gemäß einer weiteren Ausführungsform;
- Figur 7 eine perspektivische Ansicht einer erfindungsgemäßen Baugruppe für ein Fahrzeuglenkrad mit einer erfindungsgemäßen Kopplungsvorrichtung gemäß noch einer weiteren Ausführungsform;
- Figur 8 eine perspektivische Schnittansicht einer erfindungsgemäßen Baugruppe für ein Fahrzeuglenkrad mit einer erfindungsgemäßen Kopplungsvorrichtung gemäß noch einer weiteren Ausführungsform
- Figur 9 einen Detailschnitt durch die Baugruppe gemäß Figur 8 im Bereich eines Befestigungskörpers der erfindungsgemäßen Kopplungsvorrichtung;
- Figur 10 eine perspektivische Untersicht der erfindungsgemäßen Kopplungsvorrichtung gemäß Figur 9 im Bereich des Befestigungskörpers;
- Figur 11 eine perspektivische Untersicht eines Dämpfungselements für die erfindungsgemäße Kopplungsvorrichtung gemäß Figur 10;
- Figur 12 eine perspektivische Ansicht eines Fahrzeuglenkrads mit einer erfindungsgemäßen Kopplungsvorrichtung; und
- Figur 13 eine Schnittansicht eines erfindungsgemäßen Fahrzeuglenkrads mit einer Baugruppe gemäß Figur 8 und einem montierten Gassackmodul.

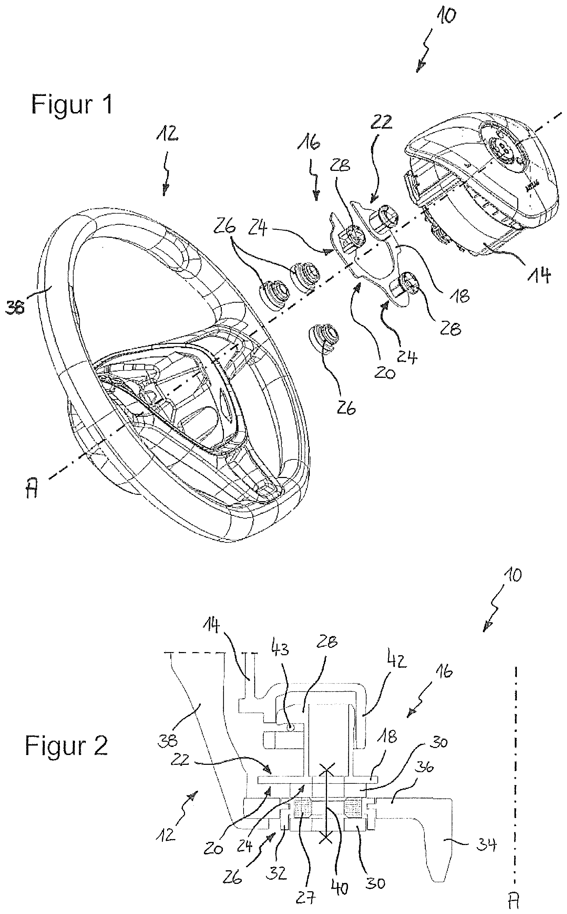

Die Figur 1 zeigt ein Fahrzeuglenkrad 10 mit einem Lenkradgrundkörper 12, einem vorgefertigten Gassackmodul 14 und einer Kopplungsvorrichtung 16 zur schwingfähigen Befestigung des Gassackmoduls 14 am Lenkradgrundkörper 12.

Die Kopplungsvorrichtung 16 umfasst einen Befestigungskörper 18, der bezüglich einer Lenkradachse A eine axiale Unterseite 20 aufweist, welche im zusammengesetzten Zustand des Fahrzeuglenkrads 10 dem Lenkradgrundkörper 12 zugewandt ist, sowie eine entgegengesetzte axiale Oberseite 22, welche im zusammengesetzten Zustand des Fahrzeuglenkrads 10 dem Gassackmodul 14 zugewandt ist. Auf der axialen Unterseite 20 des Befestigungskörpers 18 ist eine Anlagefläche 24 für ein Dämpfungselement 26 zur schwingfähigen Kopplung des Befestigungskörpers 18 mit dem Lenkradgrundkörper 12 vorgesehen, wohingegen auf der axialen Oberseite 22 wenigstens ein Rastelement 28 zur Verrastung mit dem Gassackmodul 14 angeordnet ist.

Das Rastelement 28 ist dabei so ausgebildet, dass das Gassackmodul 14 durch eine Rastverbindung im Wesentlichen axial unverschieblich oder axial begrenzt verschieblich mit dem Befestigungskörper 18 koppelbar ist.

Der Befestigungskörper 18 ist gemäß Figur 1 eine Befestigungsplatte, die sich senkrecht zur Lenkradachse A erstreckt und drei Rastelemente 28 aufweist. Der Befestigungskörper 18 ist hier ein Metallteil, das einstückig mit den Rastelementen 28 ausgeführt ist, wobei die Rastelemente 28 einen identischen Abstand zur Lenkradachse A aufweisen und in Umfangsrichtung gleichmäßig verteilt angeordnet sind. Alternativ sind jedoch auch Ausführungsvarianten denkbar, bei dem der Befestigungskörper 18 aus einem robusten Kunststoff hergestellt ist.

Die Kopplungsvorrichtung 16 weist im dargestellten Ausführungsbeispiel drei Dämpfungselemente 26 auf, welche jeweils an einer Anlagefläche 24 auf der axialen Unterseite 20 der Befestigungsplatte anliegen.

Gemäß Figur 1 ist jedem Rastelement 28 ein Dämpfungselement 26 zugeordnet, wobei die Rastelemente 28 und die zugeordneten Dämpfungselemente 26 jeweils axial hintereinanderliegend angeordnet sind.

Die Figur 2 zeigt einen Detailschnitt durch das Fahrzeuglenkrad 10 gemäß Figur 1 im Bereich eines Dämpfungselements 26 und seines zugeordneten Rastelements 28.

Das Dämpfungselement 26 umfasst in diesem Fall ein schwingungsdämpfendes Material 27, beispielsweise ein Elastomer, sowie zwei Anschlagelemente 30 und eine Montagehülse 32, die jeweils an das schwingungsdämpfende Material 27 angrenzen. Dabei sind die Anschlagelemente 30 axial beidseits des schwingungsdämpfenden Materials 27 angeordnet, während sich die Montagehülse 32 axial zwischen die Anschlagelemente 30 erstreckt.

Der Lenkradgrundkörper 12 umfasst im Allgemeinen ein Lenkradskelett mit einem Lenkradkranz, wenigstens einer Speiche sowie einer Nabe 34 und einer Nabenplatte 36. Außerdem umfasst der Lenkradgrundkörper 12 in der Regel noch eine Umschäumung 38, zum Beispiel aus Polyurethan, die das Lenkradskelett zumindest teilweise umgibt.

Das Dämpfungselement 26 ist gemäß Figur 2 über die Montagehülse 32 am Lenkradskelett befestigt, wobei die Montagehülse 32 und die Nabenplatte 36 beispielsweise eine Bajonettverbindung ausbilden.

Ferner wird deutlich, dass der Befestigungskörper 18 mit angeformtem Rastelement 28 hier durch eine Schraube 40 mit dem Dämpfungselement 26 und über das Dämpfungselement 26 mit dem Lenkradskelett verbunden ist.

Das schwingungsdämpfende Material 27 kann bereits vorab, zum Beispiel durch Vulkanisieren, mit der Montagehülse 32 und den Anschlagelementen 30 verbunden werden, um mit diesen das vorgefertigte Dämpfungselement 26 zu bilden. Dann wird die Montagehülse 32 jedes einzelnen Dämpfungselements 26 nach Art eines Bajonettverschlusses am Lenkradgrundkörper 12, konkret an der Nabenplatte 36 des Lenkradgrundkörpers 12, befestigt. Schließlich wird der Befestigungskörper 18 mit seinen angeformten Rastelementen 28 eingelegt und durch die Schrauben 40 mit den einzelnen Dämpfungselementen 26 verbunden.

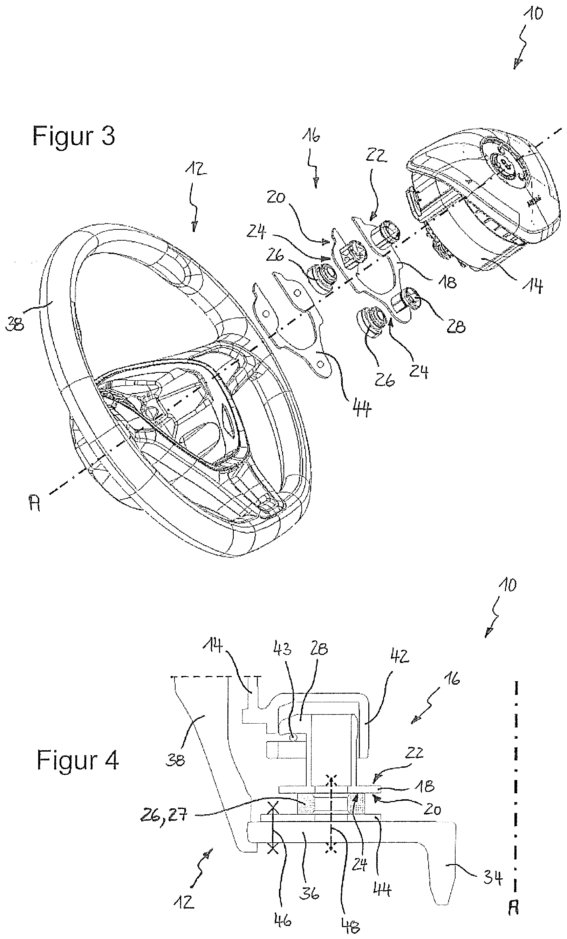

Wie später noch beispielhaft anhand der Figur 4 beschrieben wird, sind jedoch selbstverständlich auch Alternativen zur Befestigung der Kopplungsvorrichtung 16 am Lenkradgrundkörper 12 denkbar.

Jedenfalls ergibt sich auf diese Weise eine Baugruppe umfassend den Lenkradgrundkörper 12, die oben beschriebene Kopplungsvorrichtung 16 sowie wenigstens ein Dämpfungselement 26 zur schwingfähigen Kopplung des Befestigungskörpers 18 mit dem Lenkradgrundkörper 12, wobei das wenigstens eine Dämpfungselement 26 auf der axialen Unterseite 20 des Befestigungskörpers 18 angeordnet und zusammen mit dem Befestigungskörper 18 am Lenkradgrundkörper 12 vormontiert ist.

Die Rastelemente 28 der Kopplungsvorrichtung 16 sind gemäß den Figuren 1 und 2 jeweils starre Rasthaken, die beim axialen Aufstecken des vorgefertigten Gassackmoduls 14 in Modulbuchsen 42 eintauchen und mit einem am Gassackmodul 14 montierten Federdraht 43 verrasten.

Die Figur 3 zeigt ein Fahrzeuglenkrad 10, welches sich von der Lenkradkonstruktion gemäß Figur 1 lediglich durch eine andere Ausführungsform der Kopplungsvorrichtung 16 unterscheidet. Um Wiederholungen zu vermeiden wird daher generell auf die obige Beschreibung verwiesen und nachfolgend hauptsächlich auf Unterschiede eingegangen.

Verglichen mit der Ausführungsform gemäß Figur 1 weist die Kopplungsvorrichtung 16 gemäß Figur 3 eine andere, mit Blick auf den Montageaufwand besonders vorteilhafte Befestigung am Lenkradgrundkörper 12 auf. Statt der Anschlagelemente 30 und Montagehülsen 32 weist die Kopplungsvorrichtung 16 eine Grundplatte 44 zur Montage des Befestigungskörpers 18 am Lenkradgrundkörper 12 auf.

Das schwingungsdämpfende Material 27 bildet in diesem Fall das Dämpfungselement 26 und kann, zum Beispiel durch Vulkanisieren, bereits vorab mit dem Befestigungskörper 18 und der Grundplatte 44 verbunden werden, sodass das Dämpfungselement 26 Teil der vorgefertigten Kopplungsvorrichtung 16 ist.

Anhand des Detailschnitts gemäß Figur 4 wird deutlich, dass die Grundplatte 44 der Kopplungsvorrichtung 16 danach nur noch am Lenkradgrundkörper 12 befestigt werden muss, wobei die Grundplatte 44 im vorliegenden Ausführungsbeispiel konkret durch eine Schraube 46 mit der Nabenplatte 36 des Lenkradgrundkörpers 12 verschraubt ist.

Zur weiteren Reduktion des Montageaufwands für die Kopplungsvorrichtung 16 ist alternativ oder zusätzlich zur Verschraubung auch denkbar, die Grundplatte 44 zumindest randseitig in die Umschäumung 38 einzuschäumen und dadurch am Lenkradgrundkörper 12 zu befestigen.

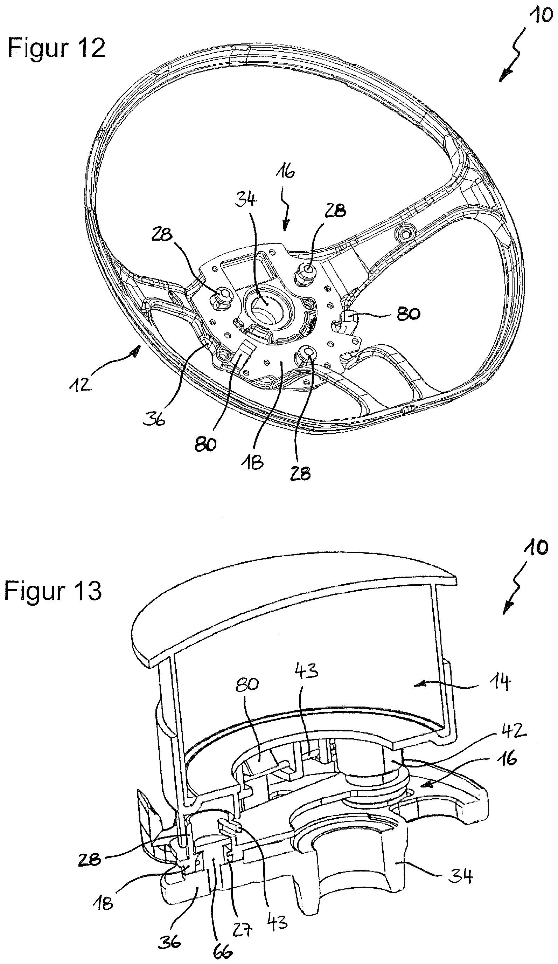

Um zu verhindern, dass sich das Gassackmodul 14 bei seiner Aktivierung vollständig vom Lenkradgrundkörper 12 löst, können direkt am Lenkradgrundkörper 12 Fangelemente vorgesehen sein, die im normalen Fahrbetrieb vom Gassackmodul 14 beabstandet sind und erst bei einer Modulaktivierung unmittelbar am Gassackmodul 14 angreifen und das Modul 14 zurückhalten. Diese Fangelemente sind beispielsweise am Lenkradskelett des Lenkradgrundkörpers 12 angeformte Fanghaken oder Rasthaken 80 (siehe Figur 12).

Gemäß einer speziellen Variante des Fahrzeuglenkrads 10 sind derartige Fangelemente nicht vorgesehen. Das Gassackmodul 14 ist dann ausschließlich über die Kopplungsvorrichtung 16 am Lenkradgrundkörper 12 befestigt. Um das Rastelement 28 der Kopplungsvorrichtung 16 in diesem Fall besonders fest und zuverlässig am Lenkradgrundkörper 12 zu fixieren, ist alternativ oder zusätzlich zur Schraube 46 eine in Figur 4 gestrichelt angedeutete Schraube 48 vorgesehen.

Hinsichtlich einer Hupenfunktion des Lenkrads 10 ist es besonders vorteilhaft, wenn das Fahrzeuglenkrad 10 einen Hupenkontakt 50 sowie einen axial an den Hupenkontakt 50 angrenzenden Gegenkontakt 52 aufweist, wobei sowohl der Hupenkontakt 50 als auch der Gegenkontakt 52 an schwingfähig gelagerten Komponenten des Fahrzeuglenkrads 10 ausgebildet sind.

Schwingfähig gelagerte Komponenten sind in diesem Zusammenhang beispielsweise der Befestigungskörper 18 der Kopplungsvorrichtung 16 sowie das Gassackmodul 14 mit all seinen Modulbauteilen.

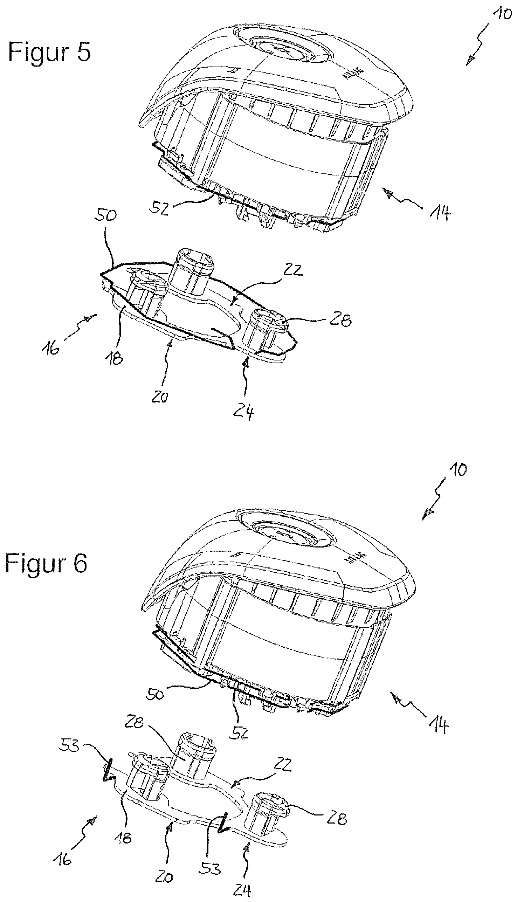

In den Figuren 5 bis 7 sind beispielhaft verschiedene Möglichkeiten zur Realisierung einer solchen Hupenfunktion am Fahrzeuglenkrad 10 dargestellt.

Die Figur 5 zeigt eine Baugruppe für das Fahrzeuglenkrad 10, mit einem vorgefertigten Gassackmodul 14 und einer Kopplungsvorrichtung 16, welche auf der Oberseite 22 des Befestigungskörpers 18 einen Hupenkontakt 50 zur Auslösung eines Hupsignals aufweist.

Das Gassackmodul 14 weist axial angrenzend an den Hupenkontakt 50 einen Gegenkontakt 52 auf, wobei das (gesamte) Gassackmodul 14 zur Auslösung des Hupsignals relativ zum Befestigungskörper 18 axial verschieblich gelagert ist. Anders ausgedrückt ist das vorgefertigte Gassackmodul 14 also über die Rastverbindung mit den Rastelementen 28 der Kopplungsvorrichtung 16 im zusammengesetzten Zustand des Fahrzeuglenkrads 10 axial begrenzt verschieblich mit dem Befestigungskörper 18 gekoppelt.

Die Figur 6 zeigt eine weitere Baugruppe für das Fahrzeuglenkrad 10, welche sich von der Ausführungsform gemäß Figur 5 lediglich dadurch unterscheidet, dass das Gassackmodul 14 sowohl den Hupenkontakt 50 als auch den vom Hupenkontakt 50 axial beabstandeten Gegenkontakt 52 aufweist. Der schwingfähig gelagerte Befestigungskörper 18 weist axial angrenzend an den Hupenkontakt 50 wenigstens ein axial abstehendes Betätigungselement 53 auf, wobei in der dargestellten Variante zwei hakenartige Vorsprünge als Betätigungselemente 53 vorgesehen sind. Zur Hupenbetätigung wird dann das (gesamte) Gassackmodul 14 entgegen einer Federkraft axial in Richtung zum Befestigungskörper 18 bewegt, wobei der Hupenkontakt 50 durch das wenigstens eine Betätigungselement 53 in Richtung zum Gegenkontakt 52 verformt oder verschoben wird, bis bei einer Berührung der Kontakte das gewünschte Hupsignal ertönt.

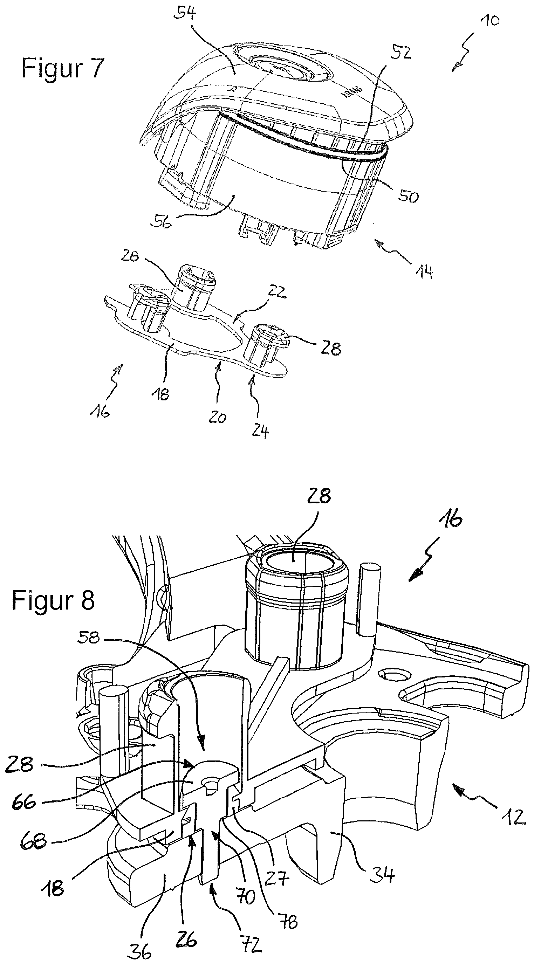

Die Figur 7 zeigt schließlich noch eine weitere Ausführungsform der Baugruppe für das Fahrzeuglenkrad 10, mit einem vorgefertigten Gassackmodul 14 und einer Kopplungsvorrichtung 16, wobei die Hupenfunktion in das Gassackmodul 14 integriert ist. Das vorgefertigte Gassackmodul 14 weist in diesem Fall einen Moduldeckel 54 mit dem Hupenkontakt 50 sowie ein weiteres Modulbauteil 56 mit dem axial an den Hupenkontakt 50 angrenzenden Gegenkontakt 52 auf, wobei der Moduldeckel 54 zur Auslösung des Hupsignals relativ zum weiteren Modulbauteil 56 axial verschieblich gelagert ist.

Verglichen mit den Ausführungsvarianten gemäß den Figuren 5 und 6 erfolgt eine Hupenbetätigung gemäß Figur 7 also nicht durch Verschieben des gesamten Gassackmoduls 14, sondern durch eine Relativbewegung zwischen dem Moduldeckel 54 und dem weiteren Modulbauteil 56, beispielsweise einem Modulgehäuse.

Allen Ausführungsvarianten ist jedoch gemeinsam, dass alle zur Hupenbetätigung notwendigen Bauteile wie Hupenkontakte 50, Gegenkontakte 52 und/oder Betätigungselemente 53 schwingfähig am Lenkradgrundkörper 12 gelagert sind. Bei einem Fahrzeuglenkrad 10 mit Schwingungstilger sind die zur Hupenbetätigung notwendigen Bauteile mit anderen Worten alle Teil der Tilgermasse des Lenkrad-Schwingungstilgers.

Dies gilt auch für die weitere, in den Figuren 8 bis 13 dargestellte Ausführungsform der Kopplungsvorrichtung 16, bei der sich das Dämpfungselement 26 durch eine Öffnung 58 des Befestigungskörpers 18 erstreckt.

Das Dämpfungselement 26 besteht im vorliegenden Ausführungsbeispiel aus dem schwingungsdämpfenden Material 27, welches ringförmig ausgebildet ist und außenseitig einen radialen Absatz aufweist. Die Befestigungskörper-Öffnung 58 hat einen Öffnungsrand mit radial einwärts ragenden Vorsprüngen 60, 62, welche die Anlagefläche 24 für das Dämpfungselement 26 bilden und am radialen Absatz des schwingungsdämpfenden Materials 27 angreifen.

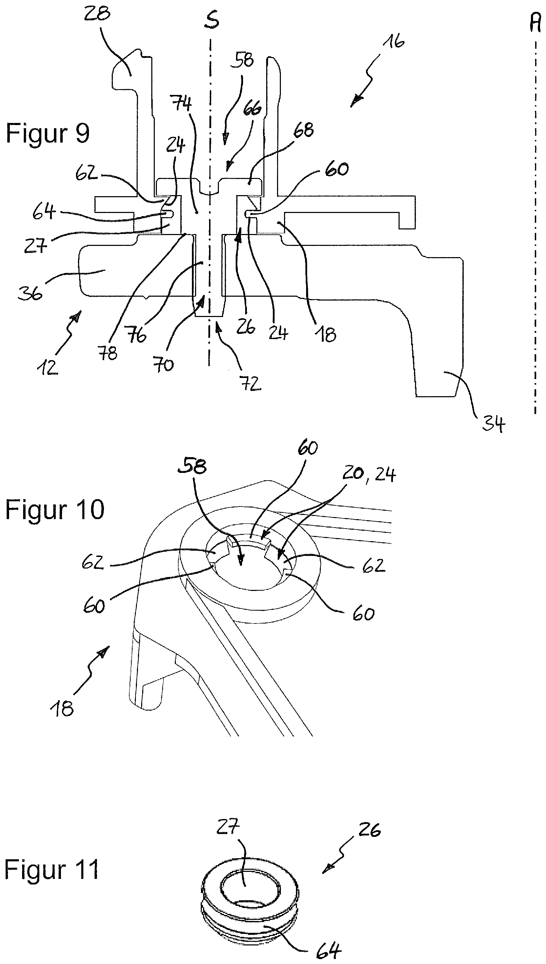

Der radiale Absatz im schwingungsdämpfenden Material 27 ist gemäß Figur 11 als umlaufende Nut 64 ausgeführt, wobei der Öffnungsrand, konkret die Vorsprünge 60 des Öffnungsrands in die Nut 64 eingreifen. Dadurch lässt sich der elastische Ring aus schwingungsdämpfendem Material 27 schnell und einfach in die Öffnung 58 einknüpfen, sodass das Dämpfungselement 26 mit minimalem Aufwand am Befestigungskörper 18 axial positioniert und fixiert ist. Jeder Vorsprung 60 des Befestigungskörpers 18 weist eine dem Lenkradgrundkörper 12 zugewandte axiale Unterseite 20 auf und bildet eine Anlagefläche 24 für das Dämpfungselement 26, das im vorliegenden Fall dem ringförmigen schwingungsdämpfenden Material 27 entspricht.

Die Figuren 8 und 9 zeigen eine Baugruppe mit einem Lenkradgrundkörper 12, einer Kopplungsvorrichtung 16 und einer Schraube 66 zur Montage der Kopplungsvorrichtung 16 am Lenkradgrundkörper 12, wobei sich die Schraube 66 durch das ringförmige schwingungsdämpfende Material 27 erstreckt.

Mit Bezug auf eine Schraubenachse S erstreckt sich die Schraube 66 von einem Schraubenkopf 68 in axialer Richtung über einen Schraubenschaft 70 bis zu einem freien Schaftende 72. Der Schraubenschaft 70 ist gestuft ausgeführt mit einem an den Schraubenkopf 68 angrenzenden Distanzabschnitt 74 und einem zum freien Schaftende 72 hin an den Distanzabschnitt 74 angrenzenden Gewindeabschnitt 76, der vom Distanzabschnitt 74 durch eine Stufe 78 getrennt ist. Der Gewindeabschnitt 76 weist einen kleineren Schaftdurchmesser auf als der Distanzabschnitt 74 und ist in die Nabenplatte 36 des Lenkradgrundkörpers 12 eingeschraubt, bis die Stufe 78 an der Nabenplatte 36 anliegt und ein weiteres Einschrauben verhindert.

Das Rastelement 28 erstreckt sich in axialer Richtung vom Befestigungskörper 18 zu einem freien Ende und ist im Wesentlichen hohlzylindrisch ausgebildet, wobei am freien Ende ein Rastvorsprung angeformt ist. Ein Außendurchmesser des Schraubenkopfs 68 ist etwas kleiner als ein Innendurchmesser des Rastelements 28, sodass die Schraube 66 in das Rastelement 28 eingeführt werden kann und sich durch die Öffnung 58 des Befestigungskörpers 18 in die Nabenplatte 36 erstreckt. Diese Verschraubung des Befestigungskörpers 18 im Bereich des Rastelements 28 trägt zu einer besonders kompakten Bauweise der Kopplungsvorrichtung 16 bei.

Gemäß Figur 9 ist eine axiale Abmessung des Distanzabschnitts 74 der Schraube 66 etwas größer als eine axiale Abmessung des Befestigungskörpers 18 im Bereich des Dämpfungselements 26, sodass zur Schwingungstilgung eine gewisse Bewegung des Befestigungskörpers 18 relativ zum Lenkradgrundkörper 12 möglich ist.

Eine axiale Abmessung des Dämpfungselements 26 ist wenigstens so groß wie die axiale Abmessung des Distanzabschnitts 74, sodass das schwingungsdämpfende Material 27 beim Eindrehen der Schraube 66 axial positioniert sowie bevorzugt leicht komprimiert wird.

Die Nut 64 im schwingungsdämpfenden Material 27 ist so angeordnet, dass der Befestigungskörper 18 in einer unangeregten Ruhestellung des Fahrzeuglenkrads 10 über seine in die Nut 64 eingreifenden Vorsprünge 60 axial beabstandet vom Schraubenkopf 68 und der Nabenplatte 36, insbesondere im Wesentlichen axial mittig zwischen Schraubenkopf 68 und Nabenplatte 36 gehalten wird.

Genau wie die Vorsprünge 60 weisen auch die axial an den Schraubenkopf 68 angrenzenden Vorsprünge 62 des Befestigungskörpers 18 dem Lenkradgrundkörper 12 zugewandte axiale Unterseiten 20 auf, die jeweils eine Anlagefläche 24 für das Dämpfungselement 26 bilden. Hauptsächlich dienen die Vorsprünge 60 jedoch als Anschläge des Befestigungskörpers 18 am Schraubenkopf 68, um eine maximale Relativbewegung zwischen dem Befestigungskörper 18 und dem Lenkradgrundkörper 12 festzulegen.

Das schwingungsdämpfende Material 27 liegt mit einer axialen Stirnseite zumindest abschnittsweise am Schraubenkopf 68 der Schraube 66 sowie mit einer entgegengesetzten axialen Stirnseite zumindest abschnittsweise am Lenkradgrundkörper 12 an.

Ein Aufnahmeraum für das schwingungsdämpfende Material 27 ist damit in axialer Richtung durch den Schraubenkopf 68 und den Lenkradgrundkörper 12 sowie in radialer Richtung durch den Distanzabschnitt 74 des Schraubenschafts 70 und den Befestigungskörper 18 definiert. Daher kann in vorteilhafter Weise auf separate Anschlagelemente 30 und Montagehülsen 32 (wie zum Beispiel in Figur 2 dargestellt) verzichtet werden.

Sollten außergewöhnlich hohe Kräfte, wie sie zum Beispiel bei einer Aktivierung des Gassackmoduls 14 auftreten, von der Verbindung zwischen dem Gassackmodul 14 und der Kopplungsvorrichtung 16 und/oder von der Verbindung zwischen der Kopplungsvorrichtung 16 und dem Lenkradgrundkörper 12 nicht übertragen werden können, so ist denkbar dass das Gassackmodul 14 nicht nur mittels der Kopplungsvorrichtung 16 am Lenkradgrundkörper 12 befestigt wird, sondern dass darüber hinaus eine weitere, von der Kopplungsvorrichtung 16 unabhängige Verbindung zwischen dem Gassackmodul 14 und dem Lenkradgrundkörper 12 vorgesehen ist.

Dies ist beispielsweise bei einem Fahrzeuglenkrad 10 gemäß Figur 12 veranschaulicht. In der dargestellten Lenkradausführung ist eine Kopplungsvorrichtung 16 und ein Lenkradgrundkörper 12 vorgesehen, wobei ein als Befestigungsplatte ausgeführter Befestigungskörper 18 der Kopplungsvorrichtung 16 schwingfähig mit dem Lenkradgrundkörper 12 verbunden ist und Rastelemente 28 zur Verrastung mit dem Gassackmodul 14 aufweist. Ferner sind am Lenkradgrundkörper 12 Fangelemente vorgesehen, die im normalen Fahrbetrieb vom Gassackmodul 14 beabstandet sind und erst bei einer Modulaktivierung unmittelbar am Gassackmodul 14 angreifen und dieses zurückhalten. Diese Fangelemente sind gemäß Figur 12 am Lenkradskelett des Lenkradgrundkörpers 12 angeformte Rasthaken 80.

Die Figur 13 zeigt das Fahrzeuglenkrad 10 gemäß Figur 12 mit einer Kopplungsvorrichtung 16 gemäß Figur 9 und einem montierten Gassackmodul 14. Dabei wird deutlich, dass der mit dem Gassackmodul 14 fest verbundene Federdraht 43 sowohl in die Rastelemente 28 der Kopplungsvorrichtung 16 als auch in die Rasthaken 80 des Lenkradgrundkörpers 12 eingreift.

## Patentansprüche

1. Kopplungsvorrichtung zur schwingfähigen Befestigung eines Gassackmoduls (14) an einem Lenkradgrundkörper (12) eines Fahrzeuglenkrads (10), mit
einem Befestigungskörper (18), der bezüglich einer Lenkradachse (A) eine axiale Unterseite (20) aufweist, welche im zusammengesetzten Zustand des Fahrzeuglenkrads (10) dem Lenkradgrundkörper (12) zugewandt ist, sowie eine entgegengesetzte axiale Oberseite (22), welche im zusammengesetzten Zustand des Fahrzeuglenkrads (10) dem Gassackmodul (14) zugewandt ist,
einer auf der axialen Unterseite (20) vorgesehenen Anlagefläche (24) für ein Dämpfungselement (26) zur schwingfähigen Kopplung des Befestigungskörpers (18) mit dem Lenkradgrundkörper (12), sowie
einem auf der Oberseite (22) des Befestigungskörpers (18) angeordneten Rastelement (28) zur Verrastung mit dem Gassackmodul (14),
wobei das Rastelement (28) so ausgebildet ist, dass das Gassackmodul (14) durch eine Rastverbindung im Wesentlichen axial unverschieblich oder axial begrenzt verschieblich mit dem Befestigungskörper (18) koppelbar ist,
**dadurch gekennzeichnet, dass** die Kopplungsvorrichtung (16) ein Dämpfungselement (26) aufweist, welches an der Anlagefläche (24) auf der axialen Unterseite (20) des Befestigungskörpers (18) anliegt und den Befestigungskörper (18) mit dem Lenkradgrundkörper (12) schwingfähig koppelt, sodass mit Bezug auf den Befestigungskörper (18) eine Schwingungstilgung lenkradgrundkörperseitig erfolgt, wohingegen eine Hupenfunktion gassackmodulseitig realisiert ist.

2. Kopplungsvorrichtung nach Anspruch 1, **dadurch gekennzeichnet, dass** der Befestigungskörper (18) eine Befestigungsplatte ist, die sich im Wesentlichen senkrecht zur Lenkradachse (A) erstreckt und insbesondere mehrere Rastelemente (28) aufweist.

3. Kopplungsvorrichtung nach wenigstens einem der vorhergehenden Ansprüche, **dadurch gekennzeichnet, dass** mehrere Rastelemente (28) vorgesehen sind und jedem Rastelement (28) ein Dämpfungselement (26) zugeordnet ist, wobei die Rastelemente (28) und die zugeordneten Dämpfungselemente (26) jeweils axial hintereinanderliegend angeordnet sind.

4. Kopplungsvorrichtung nach wenigstens einem der vorhergehenden Ansprüche, **dadurch gekennzeichnet, dass** auf der axialen Oberseite (22) des Befestigungskörpers ein Hupenkontakt (50) oder ein Betätigungselement (53) zur Auslösung eines Hupsignals angeordnet und das Rastelement (28) so ausgebildet ist, dass das Gassackmodul (14) durch die Rastverbindung axial begrenzt verschieblich mit dem Befestigungskörper (18) koppelbar ist.

5. Kopplungsvorrichtung nach wenigstens einem der vorhergehenden Ansprüche, **dadurch gekennzeichnet, dass** der Befestigungskörper (18) und der Lenkradgrundkörper (12) zumindest quer zur Lenkradachse (A) relativ zueinander beweglich sind, insbesondere wobei das Dämpfungselement (26) an der axialen Unterseite (20) des Befestigungskörpers (18) vormontiert ist.

6. Kopplungsvorrichtung nach Anspruch 5, **dadurch gekennzeichnet, dass** sich das Dämpfungselement (26) durch eine Öffnung (58) des Befestigungskörpers (18) erstreckt.

7. Kopplungsvorrichtung nach Anspruch 6, **dadurch gekennzeichnet, dass** das Dämpfungselement (26) ein ringförmig ausgeführtes, schwingungsdämpfendes Material (27) mit einem radialen Absatz umfasst, wobei ein Rand der Öffnung (58) eine Anlagefläche (24) bildet und am radialen Absatz des schwingungsdämpfenden Materials (27) angreift.

8. Kopplungsvorrichtung nach Anspruch 7, **dadurch gekennzeichnet, dass** der radiale Absatz im schwingungsdämpfenden Material (27) als Nut (64) ausgeführt ist, wobei der Rand der Befestigungskörper-Öffnung (58) zumindest abschnittsweise in die Nut (64) eingreift.

9. Baugruppe umfassend
einen Lenkradgrundkörper (12),
eine Kopplungsvorrichtung (16) nach Anspruch 7 oder 8, und
eine Schraube (66) zur Montage der Kopplungsvorrichtung (16) am Lenkradgrundkörper (12), welche sich durch das ringförmig ausgeführte, schwingungsdämpfende Material (27) erstreckt,
wobei das schwingungsdämpfende Material (27) mit einer axialen Stirnseite zumindest abschnittsweise an einem Schraubenkopf (68) der Schraube (66) und/ oder mit einer entgegengesetzten axialen Stirnseite zumindest abschnittsweise am Lenkradgrundkörper (12) anliegt.

10. Baugruppe umfassend
einen Lenkradgrundkörper (12),
eine Kopplungsvorrichtung (16) nach einem der Ansprüche 1 bis 8 und
ein Dämpfungselement (26) zur schwingfähigen Kopplung des Befestigungskörpers (18) mit dem Lenkradgrundkörper (12),
wobei das Dämpfungselement (26) auf der axialen Unterseite (20) des Befestigungskörpers (18) angeordnet sowie zusammen mit dem Befestigungskörper (18) am Lenkradgrundkörper (12) vormontiert ist.

11. Baugruppe umfassend
ein vorgefertigtes Gassackmodul (14) und
eine Kopplungsvorrichtung (16) nach wenigstens einem der Ansprüche 1 bis 3 und 5 bis 8,
**dadurch gekennzeichnet, dass** das vorgefertigte Gassackmodul (14) einen Moduldeckel (54) mit einem Hupenkontakt (50) sowie ein weiteres Modulbauteil (56) mit einem axial an den Hupenkontakt (50) angrenzenden Gegenkontakt (52) aufweist, wobei der Moduldeckel (54) zur Auslösung eines Hupsignals relativ zum weiteren Modulbauteil (56) axial verschieblich gelagert ist.

12. Baugruppe umfassend
ein vorgefertigtes Gassackmodul (14) und
eine Kopplungsvorrichtung (16) nach Anspruch 4,
**dadurch gekennzeichnet, dass** das vorgefertigte Gassackmodul (14) axial angrenzend an den Hupenkontakt (50) einen Gegenkontakt (52) aufweist, wobei das Gassackmodul (14) zur Auslösung eines Hupsignals relativ zum Befestigungskörper (18) axial verschieblich gelagert ist.

13. Fahrzeuglenkrad eines Kraftfahrzeugs, mit
einem Lenkradgrundkörper (12),
einem vorgefertigten Gassackmodul (14),
einer Kopplungsvorrichtung (16) nach wenigstens einem der Ansprüche 1 bis 8 und
einem Dämpfungselement (26) zur schwingfähigen Kopplung des Befestigungskörpers (18) mit dem Lenkradgrundkörper (12),
wobei das Fahrzeuglenkrad (10) einen Hupenkontakt (50) sowie einen axial an den Hupenkontakt (50) angrenzenden Gegenkontakt (52) aufweist, und
wobei sowohl der Hupenkontakt (50) als auch der Gegenkontakt (52) an schwingfähig gelagerten Komponenten des Fahrzeuglenkrads (10) ausgebildet sind.

14. Fahrzeuglenkrad nach Anspruch 13, **dadurch gekennzeichnet, dass** das Gassackmodul (14) ausschließlich durch die Rastverbindung mit der Kopplungsvorrichtung (16) am Lenkradgrundkörper (12) befestigt ist.

15. Fahrzeuglenkrad nach Anspruch 13, **dadurch gekennzeichnet, dass** das Gassackmodul (14) mittels der Kopplungsvorrichtung (16) am Lenkradgrundkörper (12) befestigt ist, wobei darüber hinaus eine weitere, von der Kopplungsvorrichtung (16) unabhängige Verbindung zwischen dem Gassackmodul (14) und dem Lenkradgrundkörper (12) vorgesehen ist.

## Claims

1. A coupling device for the attachment of an airbag module (14) to a steering wheel base body (12) of a vehicle steering wheel (10) in an oscillatory manner, comprising
a mounting member (18) having, with respect to a steering wheel axis (A), an axial lower side (20) which faces the steering wheel base body (12) in the assembled state of the vehicle steering wheel (10), and an opposite axial upper side (22) which faces the airbag module (14) in the assembled state of the vehicle steering wheel (10),
an abutment face (24) for a damping element (26) provided on the axial lower side (20) for coupling the mounting member (18) to the steering wheel base body (12) in an oscillatory manner, and
a latching element (28) disposed on the upper side (22) of the mounting member (18) for latching with the airbag module (14),
wherein the latching element (28) is configured so that the airbag module (14) can be coupled to the mounting member (18) by a latching connection to be substantially axially fixed or axially movable to a restricted extent,
**characterized in that** the coupling device (16) includes a damping element (26) which abuts on the abutment face (24) on the axial lower side (20) of the mounting member (18) and couples the mounting member (18) to the steering wheel base body (12) in an oscillatory manner so that, with respect to the mounting member (18), vibration is absorbed on the side of the steering wheel base body, whereas a horn function is realized on the airbag module side.

2. The coupling device according to claim 1, **characterized in that** the mounting member (18) is a mounting plate extending substantially perpendicularly to the steering wheel axis (A) and having especially plural latching elements (28).

3. The coupling device according to at least one of the preceding claims, **characterized in that** plural latching elements (28) are provided and a damping element (26) is assigned to each latching element (28), with the stop elements (28) and the assigned damping elements (26) being respectively arranged axially in series.

4. The coupling device according to at least one of the preceding claims, **characterized in that** on the axial upper side (22) of the mounting member a horn contact (50) or an actuator (53) for triggering a horn signal is arranged and the latching element (28) is configured so that the airbag module (14) can be coupled to the mounting member (18) to be axially movable to a restricted extent by the latching connection.

5. The coupling device according to at least one of the preceding claims, **characterized in that** the mounting member (18) and the steering wheel base body (12) are movable relative to each other at least transversely to the steering wheel axis (A), especially wherein the damping element (26) is pre-assembled on the axial lower side (20) of the mounting member (18).

6. The coupling device according to claim 5, **characterized in that** the damping element (26) extends through an opening (58) of the mounting member (18).

7. The coupling device according to claim 6, **characterized in that** the damping element (26) comprises an annular vibration-damping material (27) having a radial shoulder, wherein an edge of the opening (58) forms an abutment face (24) and acts on the radial shoulder of the vibration-damping material (27).

8. The coupling device according to claim 7, **characterized in that** the radial shoulder is configured as a groove (64) in the oscillatory material (27), the edge of the mounting member opening (58) engaging at least in portions in the groove (64).

9. A subassembly comprising
a steering wheel base body (12),
a coupling device (16) according to claim 7 or 8, and
a screw (66) for mounting the coupling device (16) on the steering wheel base body (12), said screw extending through the annular vibration-damping material (27),
wherein the vibration-damping material (27) with an axial end face abuts at least in portions on a screw head (68) of the screw (66) and/or with an opposite axial end face abuts at least in portions on the steering wheel base body (12).

10. A subassembly comprising
a steering wheel base (12),
a coupling device (16) according to any one of the claims 1 to 8 and
a damping element (26) for coupling the mounting member (18) to the steering wheel base body (12) in an oscillatory manner,
wherein the damping element (26) is arranged on the axial lower side (20) of the mounting member (18) and together with the mounting member (18) is pre-assembled on the steering wheel base body (12).

11. A subassembly comprising
a pre-fabricated airbag module (14) and
a coupling device (16) according to at least one of the claims 1 to 3 and 5 to 8,
**characterized in that** the pre-fabricated airbag module (14) includes a module cover (54) having a horn contact (50) and a further module component (56) having a counter-contact (52) being axially adjacent to the horn contact (50), wherein the module cover (54) is supported to be axially movable relative to the further module component (56) for triggering a horn signal.

12. A subassembly comprising
a pre-fabricated airbag module (14) and
a coupling device (16) according to claim 4,
**characterized in that** the pre-fabricated airbag module (14) includes a counter-contact (52) being axially adjacent to the horn contact (50), wherein the airbag module (14) is supported to be axially movable relative to the mounting member (18) for triggering a horn signal.

13. A vehicle steering wheel of an automotive vehicle, comprising a steering wheel base body (12),
a pre-fabricated airbag module (14),
a coupling device (16) according to at least one of the claims 1 to 8, and
a damping element (26) for coupling the mounting member (18) to the steering wheel base body (12) in an oscillatory manner,
wherein the vehicle steering wheel (10) includes a horn contact (50) and a counter-contact (52) being axially adjacent to the horn contact (50), and
wherein both the horn contact (50) and the counter-contact (52) are configured on components of the vehicle steering wheel (10) which are supported in an oscillatory manner.

14. The vehicle steering wheel according to claim 13, **characterized in that** the airbag module (14) is attached to the steering wheel base body (12) exclusively by the latching connection with the coupling device (16).

15. The vehicle steering wheel according to claim 13, **characterized in that** the airbag module (14) is attached to the steering wheel base body (12) by means of the coupling device (16), wherein additionally a further connection independent of the coupling device (16) is provided between the airbag module (14) and the steering wheel base body (12).

## Revendications

1. Dispositif d'accouplement pour la fixation en vibration d'un module de coussin gonflable (14) sur un corps principal de volant (12) d'un volant de direction de véhicule (10), comportant
un corps de fixation (18),qui par rapport à un axe de volant (A) possède une face inférieure axiale (20), laquelle, à l'état assemblé du volant de direction de véhicule (10), fait face au corps principal de volant (12), ainsi qu'un côté supérieur axial opposé (22), lequel à l'état assemblé du volant de direction du véhicule (10) fait face au module de coussin gonflable (14),
une surface d'appui (24) prévue sur la face inférieure axiale (20) pour un élément amortisseur (26) destiné à coupler en vibration le corps de montage (18) avec le corps principal de volant (12), ainsi qu'
un élément de verrouillage (28) disposé sur le côté supérieur (22) du corps de fixation (18) pour verrouiller le module de coussin gonflable (14),
pour lequel l'élément de verrouillage (28) est formé de sorte que le module de coussin gonflable (14) au travers d'une liaison de verrouillage puisse être couplé au corps de fixation (18) de manière essentiellement non mobile axialement ou limité axialement,
**caractérisé en ce que** le dispositif d'accouplement possède un élément amortisseur (26), lequel repose contre la surface de contact (24) sur la face inférieure axiale (20) du corps de fixation (18) et que le corps de fixation (18) s'accouple en vibration au corps principal du volant (12), de sorte qu'en ce qui concerne le corps de fixation (18) l'amortissement des vibrations est appliqué du côté du corps du volant, tandis qu'une fonction de l'avertisseur sonore est mise en œuvre du côté du module de coussin gonflable.

2. Dispositif d'accouplement selon la revendication 1, **caractérisé en ce que** le corps de fixation (18) est une plaque de montage, laquelle s'étend sensiblement perpendiculairement à l'axe du volant (A) et possède en particulier une pluralité d'éléments de verrouillage (28).

3. Dispositif d'accouplement selon au moins l'une des revendications précédentes, **caractérisé en ce que** plusieurs éléments de verrouillage (28) sont prévus et que chaque élément de verrouillage (28) est associé à un élément d'amortissement (26), pour lequel les éléments de verrouillage (28) et les éléments d'amortissement associés (26) sont chacun disposés axialement les uns derrière les autres.

4. Dispositif d'accouplement selon au moins l'une des revendications précédentes, **caractérisé en ce que** sur le côté supérieur axial (22) du corps de fixation est disposé un contact d'avertisseur sonore (50) ou un élément d'actionnement (53) destiné à déclencher un signal d'avertissement sonore et que l'élément de verrouillage (28) est formé de sorte que, le module de coussin gonflable (14) au moyen de la liaison de verrouillage est couplé avec le corps de fixation (18) en permettant un déplacement limité axialement.

5. Dispositif d'accouplement selon au moins l'une des revendications précédentes, **caractérisé en ce que** le corps de fixation (18) et le corps principal du volant (12) sont mobiles l'un par rapport à l'autre au moins transversalement à l'axe du volant (A), en particulier pour lequel l'élément amortisseur (26) est préassemblé sur la face inférieure axiale (20) du corps de fixation (18).

6. Dispositif d'accouplement selon la revendication 5, **caractérisé en ce que** l'élément amortisseur (26) s'étend au travers d'une ouverture (58) du corps de fixation (18).

7. Dispositif d'accouplement selon la revendication 6, **caractérisé en ce que** l'élément amortisseur (26) comprend un matériau amortisseur de vibrations en forme d'anneau (27) présentant un épaulement radial, pour lequel un bord de l'ouverture (58) forme une surface de contact (24) et s'accroche à l'épaulement radial du matériau amortisseur de vibrations (27).

8. Dispositif d'accouplement selon la revendication 7, **caractérisé en ce que** l'épaulement radial dans le matériau amortisseur de vibrations (27) est conçu comme une rainure (64), pour lequel le bord de l'ouverture du corps de fixation (58) s'engage au moins partiellement dans la rainure (64).

9. Ensemble comprenant un corps principal de volant (12), un dispositif d'accouplement (16) selon la revendication 7 ou 8, et
une vis (66) pour monter le dispositif d'accouplement (16) sur le corps principal du volant (12), laquelle s'étend au travers du matériau amortisseur de vibrations en forme d'anneau (27),
pour lequel le matériau amortisseur de vibrations (27) présente une face d'extrémité axiale qui repose au moins partiellement sur une tête de vis (68) de la vis (66) et/ou au moins avec une face d'extrémité axiale opposée qui repose partiellement contre le corps principal du volant (12)

10. Ensemble comprenant
un corps principal de volant (12),
un dispositif d'accouplement (16) selon l'une des revendications 1 à 8 et
un élément amortisseur (26) pour le couplage en vibration du corps de fixation (18) avec le corps principal du volant (12),
pour lequel l'élément d'amortissement (26) est agencé sur la face inférieure axiale (20) du corps de fixation (18) ainsi que est préassemblé ensemble avec le corps de fixation (18) sur le corps principal de volant (12).

11. Ensemble comprenant
un module de coussin gonflable prémonté (14) et
un dispositif d'accouplement (16) selon au moins l'une des revendications 1 à 3 et 5 à 8,
**caractérisé en ce que** le module de coussin gonflable prémonté (14) présente un couvercle de module (54) avec un contact d'avertisseur sonore (50) ainsi que possédant un autre composant de module (56) avec un contact d'accouplement axial contigu (52) au contact d'avertisseur sonore (50), pour lequel le couvercle de module (54) est monté mobile axialement pour permettre le déclenchement d'un signal d'avertisseur sonore par rapport à l'autre composant de module (56).

12. Ensemble comprenant
un module de coussin gonflable prémonté (14) et
un dispositif d'accouplement (16) selon la revendication 4,
**caractérisé en ce que** le module de coussin gonflable prémonté (14) comporte un contact d'accouplement (52) axialement adjacent au contact de l'avertisseur sonore (50), pour lequel le module de coussin gonflable (14) est monté mobile axialement pour permettre le déclenchement d'un signal d'avertisseur sonore par rapport au corps de montage (18).

13. Volant de direction de véhicule automobile, avec
un corps principal de volant (12),
un module de coussin gonflable prémonté (14),
un dispositif d'accouplement (16) selon au moins l'une des revendications 1 à 8 et
un élément amortisseur (26) pour le couplage en vibration du corps de fixation (18) avec le corps principal du volant (12),
pour lequel le volant de véhicule (10) comporte un contact d'avertisseur sonore (50) et un contact d'accouplement (52) axialement adjacent au contact d'avertisseur sonore (50), et
pour lequel le contact de l'avertisseur sonore (50) ainsi que le contact d'accouplement (52) sont formés sur des composants montés oscillants du volant (10) du véhicule.

14. Volant de direction de véhicule automobile selon la revendication 13, **caractérisé en ce que** le module de coussin gonflable (14) est fixé exclusivement par la liaison de verrouillage avec le dispositif d'accouplement (16) au corps principal du volant (12).

15. Volant de direction de véhicule automobile selon la revendication 13, **caractérisé en ce que** le module de coussin gonflable (14) est fixé au moyen du dispositif d'accouplement (12) sur le corps principal du volant (12), pour lequel en outre, une connexion indépendante du dispositif d'accouplement (16) est fournie entre le module de coussin gonflable et le corps principal du volant (12).
